# EUROPEAN PATENT APPLICATION

(11) **EP 4 432 768 A1**
(43) Date of publication of application: **18.09.2024**
(21) Application number: 21963029.0
(22) Date of filing: 08.11.2021
(51) Int. Cl.: H04W 76/15

(54) **WIRELESS COMMUNICATION METHOD AND APPARATUS, DEVICE, AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Frommberger, Moritz
(86) International application number: PCT/CN2021/129364
(87) International publication number: WO 2023/077520

(57) **Abstract**

Embodiments of the present invention relate to the technical field of mobile communication, and provides a wireless communication method and apparatus, a device and a storage medium, which can be applied to a station device supporting multi-connection. The method comprises: determining a first message frame which comprises an identifier information bit, the identifier information bit indicating that the station device supporting multi-connection supports a mobile multi-connection access point capability; and sending the first message frame to the first station device. The wireless communication method provided by the embodiments of the present invention can be used for informing the first station device that the station device currently supporting multi-connection supports the mobile multi-connection access point capability, and has high applicability.

## Description

### TECHNICAL FIELD

The embodiments of the present disclosure relate to the field of mobile communication technology. Specifically, the embodiments of the present disclosure relate to a wireless communication method, an apparatus, a device and a storage medium.

### BACKGROUND

With the rapid development of mobile communication technology, Wireless Fidelity (Wi-Fi) technology has made great progress in terms of transmission rate and throughput. Currently, Wi-Fi technology is researched on content such as 320MHz bandwidth transmission, aggregation and collaboration of multiple frequency bands, etc. Its main application scenarios include video transmission, augmented reality (AR), virtual reality (VR), etc.

Specifically, the aggregation and collaboration of multiple frequency bands refers to the simultaneous communication between devices in 2.4GHz, 5.8GHz, 6GHz and other frequency bands. For scenarios in which devices communicate in multiple frequency bands at the same time, new Media Access Control (MAC) mechanism is also needed to be defined for management. In addition, the aggregation and coordination of multiple frequency bands is expected to support low-latency transmission.
Currently, the maximum bandwidth supported by multi-band aggregation and collaboration technology is 320MHz (160MHz+160MHz). In addition, it may also support 240MHz (160MHz+80MHz) and other bandwidths supported by existing standards.

Currently, in Non-Simultaneous Transmit and Receive (NSTR) mode, a station that supports the mobile access point multi-link device (mobile AP MLD) function needs to work based on the NSTR link pair, and the primary communication link in the NSTR link pair will be used as the primary communication link to send Beacon frames or Probe Response frames. However, it is inconclusive how the station that supports multi-link indicate whether it supports the mobile AP MLD function, and how to determine the primary communication link in an NSTR link pair.

### SUMMARY

The embodiments of the present disclosure provide a wireless communication method, apparatus, device and storage medium for notifying a first station that the current station supporting multi-link supports mobile access point multi-link device function.

According to an aspect of the embodiments of the present disclosure, there is provided a wireless communication method, performed by a station supporting multi-link, including:
determining a first message frame, where the first message frame includes an identifier information bit, and the identifier information bit is configured to indicate that the station supporting multi-link supports a mobile access point multi-link device function; and
sending the first message frame to a first station.

According to another aspect of the embodiments of the present disclosure, there is provided a wireless communication device, including:
a determining module, configured to determine a first message frame, where the first message frame includes an identifier information bit, and the identifier information bit is configured to indicate that a station supporting multi-link supports a mobile access point multi-link device function; and
a sending module, configured to send the first message frame to a first station.

According to another aspect of the embodiments of the present disclosure, there is provided a station supporting multi-link, including a memory, a processor, and a computer program stored in the memory and executable on the processor, when the processor executes the program, the method according to the embodiments of the present disclosure is implemented.

According to another aspect of the embodiments of the present disclosure, there is provided a computer-readable storage medium, where a computer program is stored on the computer-readable storage medium, and when the computer program is executed by a processor, the method according to the embodiments of the present disclosure is implemented.

In the embodiments of the present disclosure, in a process of establishing communication link with the first station, the station supporting multi-link may indicate to the first station that the station supporting multi-link supports mobile AP MLD capability, which has a high applicability.

Additional aspects and advantages of embodiments of the present disclosure will be given, in part, in the following description, and these will become apparent from the following description or learned through the practice of the present disclosure.

### BRIEF DESCRIPTION OF THE DRAWINGS

In order to more clearly illustrate the technical solutions of the embodiments of the present disclosure, the drawings needed to be used in the description of the embodiments of the present disclosure will be briefly introduced below. Obviously, the drawings in the following description are only some embodiments of the present disclosure. For those skilled in the art, other drawings can also be obtained based on these drawings without exerting inventive labor.
FIG. 1 is a flow chart of a wireless communication method provided by an embodiment of the present disclosure;
FIG. 2 is a schematic diagram of a MLD capability information subfield provided by an embodiment of the present disclosure;
FIG. 3 is another flow chart of a wireless communication method provided by an embodiment of the present disclosure;
FIG. 4 is a schematic structural diagram of a wireless communication device provided by an embodiment of the present disclosure;
FIG. 5 is a schematic structural diagram of a station that supports multi-link provided by an embodiment of the present disclosure.

### DETAILED DESCRIPTION

In the embodiment of the present disclosure, the term "and/or" describes the association relationship of associated objects, indicating that there can be three relationships, for example, A and/or B, which can mean: three cases of A alone, both A and B, and B alone. The character "/" generally indicates that the related objects are in an "or" relationship.

In the embodiments of the present disclosure, the term "multiple" refers to two or more than two, and other quantifiers are similar to it.

Exemplary embodiments will be described in detail herein, examples of which are illustrated in the accompanying drawings. When the following description refers to the drawings, the same numbers in different drawings refer to the same or similar elements, unless otherwise indicated. The implementations described in the following exemplary embodiments do not represent all implementations consistent with the present disclosure. Rather, they are merely examples of apparatus and methods consistent with aspects of the present disclosure as detailed in the appended claims.

The terminology used in the present disclosure is for the purpose of describing particular embodiments only and is not intended to be limiting of the disclosure. As used in the present disclosure and the appended claims, the singular forms "a," "the" and "said" are intended to include the plural forms as well, unless the context clearly dictates otherwise. It will also be understood that the term "and/or" as used herein refers to and includes any and all possible combinations of one or more of the associated listed items.

It should be understood that although the terms first, second, third, etc. may be used in the present disclosure to describe various information, the information should not be limited to these terms. These terms are only used to distinguish information of the same type from each other. For example, without departing from the scope of the present disclosure, the first information may also be called the second information, and similarly, the second information may also be called the first information. Depending on the context, for example, the word "if" as used herein may be interpreted as "when" or "while" or "in response to determining".

The technical solutions in the embodiments of the present disclosure will be clearly and completely described below with reference to the accompanying drawings in the embodiments of the present disclosure. Obviously, the described embodiments are only some of the embodiments of the present disclosure, not all of them. Based on the embodiments in the present disclosure, all other embodiments obtained by those skilled in the art without inventive efforts fall within the scope of protection of the present disclosure.

Embodiments of the present disclosure provide a wireless communication method, an apparatus, a device, and a storage medium for a station that supports multi-link to indicate to a first station that it supports multi-link during the process of establishing a communication link with the first station, and to provide a way to determine the primary communication link in the NSTR link pair during the communication link establishment process.

The method and the device are based on the same application concept. Since the principles of the method and the device to solve the problem are similar, the implementation of the device and the method can be referred to each other, and the repeated details will not be repeated.

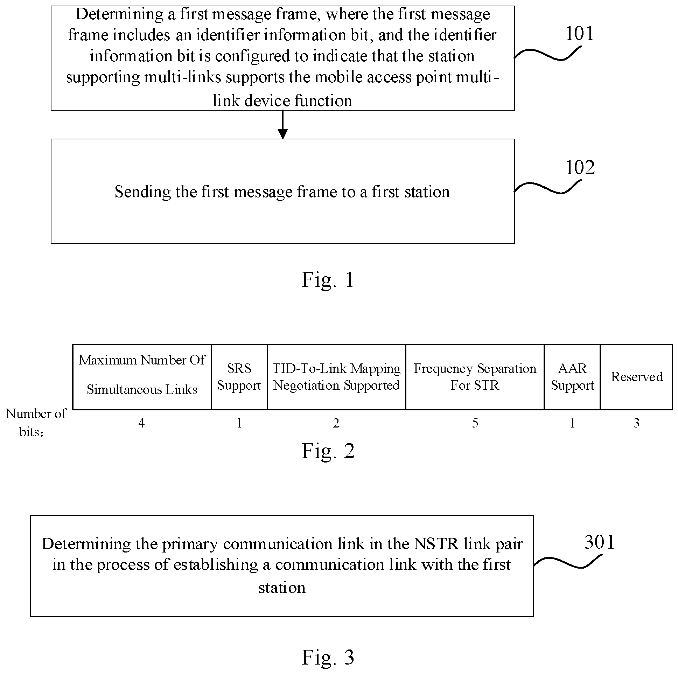

As shown in FIG. 1, an embodiment of the present disclosure provides a wireless communication method. In some examples, the method can be applied to a station that supports multi-link. The wireless communication method shown in FIG. 1 may specifically include the following steps:

Step 101: determining a first message frame. The first message frame includes an identifier information bit. The identifier information bit is configured to indicate that the station supporting multi-link supports the mobile access point multi-link device function.

Specifically, the station that supports multi-link in the embodiment of the present disclosure is a non-access point that supports multi-link (Non-Access Point Multi-Link Device, Non-AP MLD).

Specifically, the first message frame is a message frame that the station supporting multi-link needs to send to the first station during the process of establishing multiple communication links with the first station. Or, the first message frame is a message frame that the station supporting multi-link needs to send to the first station during a reassociation process with the first station.

The first station in the embodiment of the present disclosure may be an access point (Access Point Multi-Link Device, AP MLD) or a station (STA) device that supports multi-link.

In some examples, the above-mentioned first message frame is a Probe Request frame or an Association Request frame.

The above-mentioned Probe Request frame may be a multi-link probe request (ML Probe Request) frame, and the above-mentioned Association Request frame may be a Reassociation Request frame.

As an example, the station that supports multi-link may determine the probe request frame that needs to be sent to the first station as the first message frame. The probe request frame includes an identifier information bit to indicate that the station supporting multi-link supports mobility access point multi-link device (mobile AP MLD) function.

As an example, the station that supports multi-link may determine the association request frame that needs to be sent to the first station as the first message frame. The association request frame includes an identifier information bit to indicate that the station supporting multi-link supports mobile AP MLD function.

Specifically, the first message frame includes a multi-link information element, and the identifier information bit is one or more bits in the multi-link ML information element.

That is, the station supporting multi-link can indicate that the station supporting multi-link supports the mobile AP MLD function through one or more bits carried in the ML information element of the first message frame.

In some examples, the above identifier information bit may be one or more bits in the MLD capability information subfield in the ML information element.

That is, the station supporting multi-link can indicate that the station supporting multi-link supports the mobile AP MLD function through one or more bits in the MLD capability information subfield carried in the ML information element of the first message frame.

The above identifier information bit may be a reserved bit in the MLD capability information subfield of the ML information element. That is, the reserved bit in the MLD capability information subfield indicates that the station supporting multi-link supports the mobile AP MLD function.

As shown in FIG. 2, the MLD capability information subfield can represent different capabilities supported by the station supporting multi-link through different bits. For example, the Maximum Number Of Simultaneous Links indicates the maximum number of communication links received and sent simultaneously supported by station that supports multi-link. SRS Support indicates that the station supporting multi-link supports receiving frames with the SRS Control subfield. TID-To-Link Mapping Negotiation Supported indicates that the station supporting multi-link supports TID-to-link mapping negotiation. Frequency Separation For STR indicates the frequency interval between links received and sent simultaneously supported by station that supports multi-link. AAR Support indicates that the station supporting multi-link supports receiving frames with the AAR Control subfield.

In the embodiment of the present disclosure, the reserved bit (Reserved) of the MLD capability information subfield may be configured to indicate that the station supporting multi-link supports the mobile AP MLD function.

Step 102: sending the first message frame to the first station.

As an example, the station supporting multi-link sends a probe request frame to the first station. The probe request frame includes an identifier information bit to indicate that the station supporting multi-link supports the mobile AP MLD function.

As an example, the station supporting multi-link sends an association request frame to the first station. The association request frame includes an identifier information bit to indicate that the station supporting multi-link supports the mobile AP MLD function.

As shown in FIG. 3, an embodiment of the present disclosure also provides a wireless communication method. In some examples, the method can be applied to station that supports multi-link. The wireless communication method shown in FIG. 3 may specifically include the following steps:
Step 301: determining the primary communication link in the NSTR link pair in the process of establishing a communication link with the first station.

The station supporting multi-link needs to be operated under the NSTR link pair when supporting the mobile AP MLD function. Therefore, when establishing a communication link with the first station, the station that supports multi-link needs to determine the primary communication link in the NSTR link pair.

In an embodiment, determining the primary communication link in the NSTR link pair includes at least one of the following:
determining any communication link in the NSTR link pair as the primary communication link; and
determining a first communication link in the NSTR link pair as the primary communication link, where the first communication link is a communication link through which a station supporting multi-link establishes association with a first station.

The primary communication link in the NSTR link pair is configured to send a beacon frame or a probe response frame.

That is, a station that supports multi-link can determine any communication link in the NSTR link pair as the primary communication link.

Or, a station that supports multi-link may determine a first communication link in the NSTR link pair as the primary communication link. The first communication link in the NSTR link pair is a communication link through which a station that supports multi-link establishes an association with a first station.

That is to say, if the station that supports multi-link is associated with the first station through the first communication link in the NSTR link pair, the first communication link is determined as the primary communication link in the NSTR link pair.

In an embodiment, after the station that supports multi-link determines the primary communication link in the NSTR link pair, the station that supports multi-link can send a beacon frame or a Probe Response frame to the first station through the determined primary communication link.

In an embodiment, after determining the primary communication link in the NSTR link pair, the station that supports multi-link may also send indication information to the first station to indicate the primary communication link in the NSTR link pair. For the first station, the first station can determine the primary communication link in the NSTR link pair based on the indication information, and receive a beacon frame or a Probe Response frame sent by the station that supports multi-link through the primary communication link.

The indication information may be carried in any message sent by the station that supports multi-link to the first station.

In an embodiment, the station supporting multi-link may also indicate the primary communication link in the NSTR link pair through a first message frame sent to the first station.

The first message frame includes a primary communication link identifier bit, which is configured to indicate the primary communication link in the NSTR link pair.

In some examples, the above-mentioned primary communication link identifier bit may be one or more bits in the ML information element.

That is, the station supporting multi-link can indicate that the station supporting multi-link supports the mobile AP MLD function through one or more bits carried in the ML information element of the first message frame. In addition, one or more other bits in the ML information element can indicate the primary communication link in the NSTR link pair.

In some examples, the above-mentioned primary communication link identifier bit may be one or more bits in the MLD capability information subfield in the ML information element.

That is, the station supporting multi-link can indicate that the station supporting multi-link supports the mobile AP MLD function through one or more bits in the MLD capability information subfield carried in the ML information element of the first message frame. In addition, one or more other bits in the MLD capability information subfield can indicate the primary communication link in the NSTR link pair.

The above identifier information bits may be reserved bits in the MLD capability information subfield in the ML information element. That is, different bits in the reserved bits in the MLD capability information subfield respectively indicate that the station supporting multi-link supports the mobile AP MLD function and the primary communication link in the NSTR link pair.

In an embodiment, the station supporting multi-link may also indicate the NSTR link pair through a first message frame sent to the first station.

The first message frame includes a link pair identifier bit, which is configured to indicate an NSTR link pair with the first station.

In some examples, the link pair identifier bit may be one or more bits in the ML information element.

As an example, the ML information element of the first message frame sent by the station that supports multi-link may include an identifier information bit and a link pair identifier bit to respectively indicate that the station supporting multi-link supports the mobile AP MLD function and indicate the NSTR link pair between the station supporting multi-link and the first station.

The identifier information bit and the link pair identifier bit are respectively different bits in the ML information element, and the identifier information bit and the link pair identifier bit can respectively be one or more bits in the ML information element.

That is, the station supporting multi-link indicates that the station supporting multi-link supports the mobile AP MLD function and indicate the NSTR link pair with the first station through different bits carried in the ML information element of the first message frame.

As an example, the ML information element of the first message frame sent by the station that supports multi-link may include an identifier information bit, a primary communication link identifier bit, and a link pair identifier bit to respectively indicate that the station supporting multi-link supports mobile AP MLD function, and indicate the NSTR link pair between the station supporting multi-link and the first station, and the primary communication link in the NSTR link pair.

The identifier information bit, the primary communication link identifier bit and the link pair identifier bit are different bits in the ML information element, and the identifier information bit, the primary communication link identifier bit and the link pair identifier bit can be respectively one or more bits in the ML information element.

That is, the station supporting multi-link indicates that the station supporting multi-link supports the mobile AP MLD function, and indicates the NSTR link pair between the station supporting multi-link and the first station, and the primary communication link in the NSTR link pair through different bits carried in the ML information element of the first message frame.

In some examples, the link pair identifier bit may be one or more bits in the MLD capability information subfield in the ML information element.

As an example, the MLD capability information subfield of the ML information element of the first message frame sent by the station that supports multi-link may include an identifier information bit and a link pair identifier bit to respectively indicate that the station supporting multi-link supports mobile AP MLD function and indicate NSTR link pair between the station supporting multi-link and the first station.

The identifier information bit and the link pair identifier bit are respectively different bits in the MLD capability information subfield, and the identifier information bit and the link pair identifier bit can respectively be one or more bits in the MLD capability information subfield.

That is, the station supporting multi-link indicates that the station supporting multi-link supports the mobile AP MLD function and indicates NSTR link pair between the station supporting multi-link and the first station through different bits of the MLD capability information subfield carried in the ML information element of the first message frame.

As an example, the MLD capability information subfield of the ML information element of the first message frame sent by the station that supports multi-link may include an identifier information bit, a primary communication link identifier bit, and a link pair identifier bit to respectively indicate that the station supporting multi-link supports mobile AP MLD function, and indicate NSTR link pair between the station supporting multi-link and the first station, and the primary communication link in the NSTR link pair.

The identifier information bit, the primary communication link identifier bit and the link pair identifier bit are respectively different bits in the MLD capability information subfield, and the identifier information bit, the primary communication link identifier bit and the link pair identifier bit can respectively be one or more bits in the MLD capability information subfield.

That is, the station supporting multi-link indicates that the station supporting multi-link supports the mobile AP MLD function, and indicates the NSTR link pair between the station supporting multi-link and the first station, and the primary communication link in the NSTR link pair through different bits carried in the MLD capability information subfield of the ML information element of the first message frame.

The above identifier information bits may be reserved bits in the MLD capability information subfield of the ML information element. That is, different bits in the reserved bits in the MLD capability information subfield respectively indicate that the station supporting multi-link supports the mobile AP MLD function, and indicate the NSTR link pair between the station supporting multi-link and the first station, and the primary communication link in the NSTR link pair.

In an embodiment, the station that supports multi-link may also send notification information to the first station to indicate the NSTR link pair with the first station.

The above notification information may be carried in any message sent by the station that supports multi-link to the first station.

In some examples, the above notification information is the same information as the indication information sent by the station supporting multi-link to the first station. That is, the station supporting multi-link send the indication information to the first station, and the indication information is configured to indicate the NSTR link pair between the station supporting multi-link and the first station and indicate the primary communication link in the NSTR link pair.

In the embodiment of the present disclosure, the station supporting multi-link can indicate to the first station that the station supporting multi-link supports the mobile AP MLD capability and indicate the NSTR link pair between the station supporting multi-link and the first station and the primary communication link in the NSTR link pair during the process of establishing a communication link with the first station, so that the first station can determine the primary communication link in the NSTR link pair and receive the beacon frame and the probe response frame through the primary communication link. Embodiments of the present disclosure also provide a method for determining the primary communication link in the NSTR link pair when the station supporting multi-link establishes a communication link with the first station, which has high applicability.

Based on the same principle as the method provided by the embodiments of the present disclosure, the embodiments of the present disclosure also provide a wireless communication device, which can be applied to devices that provide voice and/or data connectivity to users, and handheld devices with wireless link functions, or other processing device connected to a wireless modem, etc.

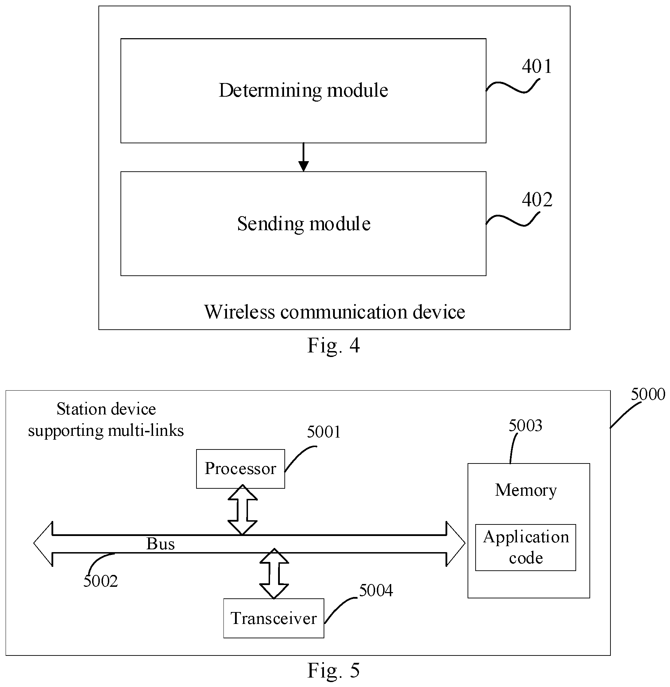

As shown in FIG. 4, an embodiment of the present disclosure provides a wireless communication device, including:
a determining module 401, configured to determine a first message frame, where the first message frame includes an identifier information bit, and the identifier information bit indicates that the station supporting multi-link supports the mobile access point multi-link device function;
a sending module 402, configured to send the first message frame to the first station.

Optionally, in the embodiment of the present disclosure, the first message frame includes a multi-link ML information element, and the identifier information bit is one or more bits in the ML information element.

Optionally, in the embodiment of the present disclosure, the above identifier information bit is one or more bits in the multi-link station MLD capability information subfield in the ML information element.

Optionally, in the embodiment of the present disclosure, the above-mentioned determining module 401 is further configured to:
in the process of establishing a communication link with the first station, determine the primary communication link in the NSTR link pair, where the primary communication link is configured to send a beacon frame or a probe response frame.

Optionally, in the embodiment of the present disclosure, the above-mentioned determining module 401 is configured to:
determine any communication link in the NSTR link pair as the primary communication link; and
determine a first communication link in the NSTR link pair as the primary communication link, where the first communication link is a communication link through which the station that supports multi-link establishes association with the first station.

Optionally, in the embodiment of the present disclosure, the above-mentioned sending module 402 is further configured to:
send indication information to the first station, where the indication information indicates the primary communication link in the NSTR link pair.

Optionally, in the embodiment of the present disclosure, the above-mentioned first message frame also includes a primary communication link identifier bit. The above-mentioned primary communication link identifier bit is one or more bits in the above-mentioned ML information element. The above-mentioned primary communication link identifier bit indicates the primary communication link in the NSTR link pair.

Optionally, in the embodiment of the present disclosure, the above-mentioned first message frame further includes a link pair identifier bit. The above-mentioned link pair identifier bit is one or more bits in the above-mentioned ML information element. The above-mentioned link pair identifier bit indicates the NSTR link pair.

Optionally, in the embodiment of the present disclosure, the first message frame is a probe request frame or an association request frame.

Optionally, in the embodiment of the present disclosure, the above-mentioned station supporting multi-link includes a non-access point Non-AP MLD that supports multi-link.

In the embodiment of the present disclosure, the above device can be configured to indicate to the first station that the station supporting multi-link supports the mobile AP MLD capability, and indicate the NSTR link pair between the station supporting multi-link and the first station, and the primary communication link in the NSTR link pair, so that the first station can determine the primary communication link in the NSTR link pair and receive the beacon frame and the probe response frame through the primary communication link. Moreover, the above device can also determine the primary communication link in the NSTR link pair when the station supporting multi-link establishes a communication link with the first station, which has high applicability.

In an embodiment, the embodiment of the present disclosure also provides a station that supports multi-link, as shown in FIG. 5. The station 5000 that supports multi-link shown in FIG. 5 can be a server, including: a processor 5001 and a memory 5003. The processor 5001 and the memory 5003 are connected, such as through a bus 5002. In some examples, the station 5000 that supports multi-link may further include a transceiver 5004. It should be noted that in practical applications, the number of transceivers 5004 is not limited to one, and the structure of the station 5000 that supports multi-link does not constitute a limitation on the embodiments of the present disclosure.

The processor 5001 can be a CPU (Central Processing Unit), a general-purpose processor, a DSP (Digital Signal Processor), an ASIC (Application Specific Integrated Circuit), or an FPGA (Field Programmable Gate Array), or other programmable logic devices, transistor logic devices, hardware components, or any combination thereof. It may implement or execute the various illustrative logical blocks, modules and circuits described based on the content of the present disclosure. The processor 5001 may also be a combination that implements computing functions, such as a combination of one or more microprocessors, a combination of a DSP and a microprocessor, etc.

The bus 5002 may include a path by which information between the above-mentioned components is transmitted. The bus 5002 may be a PCI (Peripheral Component Interconnect) bus or an EISA (Extended Industry Standard Architecture) bus, etc. The bus 5002 can be classified into an address bus, a data bus, a control bus, etc. For ease of presentation, only one thick line is used in FIG. 5, but it does not mean that there is only one bus or one type of bus.

The memory 5003 may be a read-only memory (ROM) or other types of static storage devices that can store static information and instructions, a random-access memory (RAM) or other types of dynamic storage devices that can store information and instructions. The memory 5003 can also be Electrically Erasable Programmable Read Only Memory (EEPROM), Compact Disc Read Only Memory (CD-ROM) or other optical disk storage, optical disk storage (including compressed Optical disc, laser disc, optical disc, digital versatile disc, Blu-ray disc, etc.), magnetic disk storage medium or other magnetic storage device, or any other medium which can be configured to carry or store the desired program code in the form of instructions or data structures and can be accessed by a computer, without limitation.

The memory 5003 is configured to store application program code for executing the solution of the present disclosure, and the processor 5001 controls the execution. The processor 5001 is configured to execute the application program code stored in the memory 5003 to:
determine a first message frame, where the first message frame includes an identifier information bit, and the identifier information bit indicates that the station supporting multi-link supports the mobile access point multi-link device function; and
send the first message frame to a first station.

Optionally, in the embodiment of the present disclosure, the first message frame includes a multi-link ML information element, and the identifier information bit is one or more bits in the ML information element.

Optionally, in the embodiment of the present disclosure, the identifier information bit is one or more bits in the multi-link station MLD capability information subfield in the ML information element.

Optionally, in the embodiment of the present disclosure, the processor 5001 is further configured to:
in the process of establishing a communication link with the first station, determine a primary communication link in the NSTR link pair, where the primary communication link is configured to send a beacon frame or a probe response frame.

Optionally, in the embodiment of the present disclosure, the processor 5001 is configured to:
determine any communication link in the NSTR link pair as the primary communication link; and
determine a first communication link in the NSTR link pair as the primary communication link, where the first communication link is a communication link through which the station supporting multi-link establishes association with the first station.

Optionally, in the embodiment of the present disclosure, the processor 5001 is further configured to:
send indication information to the first station, where the indication information indicates the primary communication link in the NSTR link pair.

Optionally, in the embodiment of the present disclosure, the first message frame also includes a primary communication link identifier bit. The primary communication link identifier bit is one or more bits in the ML information element. The primary communication link identifier bit indicates the primary communication link in the NSTR link pair.

Optionally, in the embodiment of the present disclosure, the first message frame further includes a link pair identifier bit. The link pair identifier bit is one or more bits in the ML information element. The link pair identifier bit indicates the NSTR link pair.

Optionally, in the embodiment of the present disclosure, the first message frame is a probe request frame or an association request frame.

Optionally, in the embodiment of the present disclosure, the station supporting multi-link includes a non-access point Non-AP MLD that supports multi-link.

The station supporting multi-link includes but is not limited to: a mobile phone, a notebook computer, a digital broadcast receiver, a PDA (personal digital assistants), a PAD (a tablet computer), a PMP (portable multimedia player), a vehicle-mounted terminal (such as a vehicle-mounted navigation terminal) and a fixed terminal such as a digital TV, a desktop computer, etc. The station supporting multi-link shown in FIG. 5 is only an example and should not bring any limitations to the functions and scope of use of the embodiments of the present disclosure.

The server provided by the present disclosure can be an independent physical server, or a server cluster or distributed system composed of multiple physical servers. It also can be a cloud server which provides basic cloud computing services such as cloud services, cloud databases, cloud computing, cloud functions, cloud storage, network services, cloud communications, middleware services, domain name services, security services, CDN, and big data and artificial intelligence platforms.

Embodiments of the present disclosure provide a computer-readable storage medium. The computer-readable storage medium stores a computer program. When run on a computer, the computer can execute the corresponding content in the foregoing method embodiments.

It should be understood that although various steps in the flowchart of the accompanying drawings are shown in sequence as indicated by arrows, these steps are not necessarily performed in the order indicated by arrows. Unless explicitly stated in this article, the execution of these steps is not strictly limited in order, and they can be executed in other orders. Moreover, at least some of the steps in the flow chart of the accompanying drawings may include multiple sub-steps or multiple stages. These sub-steps or stages are not necessarily executed at the same time, but may be executed at different times, and their execution order is also not necessarily need to be performed sequentially, but may be performed in turn or alternately with other steps or sub-steps of other steps or at least part of the stages.

It should be noted that the computer-readable storage medium mentioned above in the present disclosure may be a computer-readable signal medium or a computer-readable storage medium, or any combination of the above two. The computer-readable storage medium may be, for example, but is not limited to, an electrical, magnetic, optical, electromagnetic, infrared, or semiconductor system, apparatus or device, or any combination thereof. More specific examples of computer readable storage media may include, but are not limited to: an electrical connection having one or more conductors, a portable computer disk, a hard drive, random access memory (RAM), read only memory (ROM), removable programmable read-only memory (EPROM or flash memory), fiber optics, portable compact disk read-only memory (CD-ROM), optical storage devices, magnetic storage devices, or any suitable combination of the above. In the present disclosure, a computer-readable storage medium may be any tangible medium that contains or stores a program for use by or in connection with an instruction execution system, apparatus, or device. In the present disclosure, a computer-readable signal medium may include a data signal propagated in baseband or as part of a carrier wave, carrying computer-readable program code therein. Such propagated data signals may take a variety of forms, including but not limited to electromagnetic signals, optical signals, or any suitable combination of the above. A computer-readable signal medium may also be any computer-readable storage medium other than a computer-readable storage medium that can send, propagate, or transmit programs for use by or in connection with an instruction execution system, apparatus, or device program. The program code embodied on a computer-readable storage medium may be transmitted using any suitable medium, including but not limited to: wire, optical cable, RF (radio frequency), etc., or any suitable combination of the foregoing.

The above computer-readable storage medium may be included in the above-mentioned station that supports multi-link; it may also exist independently without being assembled into the station that supports multi-link.

The computer-readable storage medium carries one or more programs. When the one or more programs are executed by the station that supports multi-link, the station that supports multi-link executes the method shown in the above embodiment.

According to one aspect of the present disclosure, a computer program product or computer program is provided. The computer program product or computer program includes computer instructions stored in a computer-readable storage medium. The processor of the computer device reads the computer instructions from the computer-readable storage medium, and the processor executes the computer instructions, so that the computer device executes the communication link control method provided in the above various optional implementations.

The computer program code for performing the operations of the present disclosure may be written in one or more programming languages, including object-oriented programming languages such as Java, Smalltalk, C++, and conventional Procedural programming language-such as "C" or a similar programming language. The program code may be executed entirely on the user computer, executed partly on the user computer, executed as a stand-alone software package, executed partly on the user computer and partly on a remote computer or executed entirely on the remote computer or server. In situations involving the remote computer, the remote computer can be connected to the user computer through any kind of network, including a local area network (LAN) or a wide area network (WAN), or it can be connected to an external computer (such as connected through the internet by utilizing an Internet service provider).

The flowcharts and block diagrams in the figures illustrate the architecture, functionality, and operations of possible implementations of systems, methods, and computer program products according to various embodiments of the present disclosure. In this regard, each block in the flowchart or block diagram may represent a module, segment, or portion of code that contains one or more logic functions that implement the specified executable instructions. It should also be noted that, in some alternative implementations, the functions noted in the block may occur out of the order noted in the figures. For example, two blocks shown one after another may actually execute substantially in parallel, or they may be sometimes executed in the reverse order, depending on the functionality involved. It will also be noted that each block of the block diagram and/or flowchart illustration, and combinations of blocks in the block diagram and/or flowchart illustration, can be implemented by special purpose hardware-based systems that perform the specified functions or operations, or can be implemented using a combination of specialized hardware and computer instructions.

The modules involved in the embodiments of the present disclosure can be implemented in software or hardware. The name of a module does not constitute a limitation on the module itself under certain circumstances. For example, module A can also be described as "module A configured to perform operation B".

The above description is only a description of the preferred embodiments of the present disclosure and the technical principles applied. Those skilled in the art should understand that the disclosure scope involved in the present disclosure is not limited to technical solutions composed of specific combinations of the above technical features, but should also cover other technical solutions formed by any combination of the above technical features or equivalent features without departing from the concept of the present disclosure, such as a technical solution formed by replacing the above features with technical features with similar functions disclosed in this disclosure (but not limited to this).

## Claims

1. A wireless communication method, performed by a station supporting multi-link, comprising:
determining a first message frame, wherein the first message frame comprises an identifier information bit, and the identifier information bit is configured to indicate that the station supporting multi-link supports a mobile access point multi-link device function; and
sending the first message frame to a first station.

2. The method according to claim 1, wherein the first message frame comprises a multi-link ML information element, and the identifier information bit is one or more bits in the ML information element.

3. The method according to claim 2, wherein the identifier information bit is one or more bits in a multi-link station MLD capability information subfield in the ML information element.

4. The method according to claim 1, further comprising:
in a process of establishing a communication link with the first station, determining a primary communication link in a NSTR link pair, wherein the primary communication link is configured to send a beacon frame or a probe response frame.

5. The method according to claim 4, wherein determining the primary communication link in the NSTR link pair comprises at least one of:
determining any communication link in the NSTR link pair as the primary communication link; and
determining a first communication link in the NSTR link pair as the primary communication link, wherein the first communication link is a communication link through which the station supporting multi-link establishes association with the first station.

6. The method according to claim 4, further comprising:
sending indication information to the first station, wherein the indication information is configured to indicate the primary communication link in the NSTR link pair.

7. The method according to claim 2, wherein the first message frame further comprises a primary communication link identifier bit, and the primary communication link identifier bit is one or more bits in the ML information element, and the primary communication link identifier bit is configured to indicate the primary communication link in the NSTR link pair.

8. The method according to claim 2, wherein the first message frame further comprises a link pair identifier bit, and the link pair identifier bit is one or more bits in the ML information element, and the link pair identifier bit is configured to indicate the NSTR link pair.

9. The method according to claim 1, wherein the first message frame is a probe request frame or an association request frame.

10. The method according to claim 1, wherein the station supporting multi-link comprises a non-access point device Non-AP MLD that supports multi-link.

11. A wireless communication device, comprising:
a determining module, configured to determine a first message frame, wherein the first message frame comprises an identifier information bit, and the identifier information bit is configured to indicate that a station supporting multi-link supports a mobile access point multi-link device function; and
a sending module, configured to send the first message frame to a first station.

12. A station supporting multi-link, comprising a memory, a processor, and a computer program stored in the memory and executable on the processor, wherein when the processor executes the program, the method according to any one of claims 1 to 10 is implemented.

13. A computer-readable storage medium, wherein a computer program is stored on the computer-readable storage medium, and when the computer program is executed by a processor, the method according to any one of claims 1 to 10 is implemented.
